# EUROPÄISCHE PATENTSCHRIFT

(11) **EP 3 477 168 B1**
(45) Veröffentlichungstag und Bekanntmachung des Hinweises auf die Patenterteilung: **11.08.2021**
(21) Anmeldenummer: 18193461.3
(22) Anmeldetag: 10.09.2018
(51) Int. Cl.: F16K 15/14, F16K 15/18, B60T 15/02, F16K 1/42

(54) **VENTIL UND PNEUMATISCHE BREMSANLAGE**
VALVE AND PNEUMATIC BRAKE SYSTEM
VALVE ET SYSTÈME DE FREINAGE PNEUMATIQUE

(30) Priorität: 28.10.2017 DE 102017010136
(43) Veröffentlichungstag der Anmeldung: 01.05.2019
(73) Patentinhaber: ZF CV Systems Hannover GmbH, 30453 Hannover (DE)
(72) Erfinder: PETERS, Andreas, 31683 Obernkirchen (DE); SIEKER, Armin, 33611 Bielefeld (DE); LÜCHAU, Karsten-Wilhelm, 29331 Lachendorf (DE)
(74) Vertreter: Koschnitzki, Thomas

(56) Entgegenhaltungen:
- EP-A1- 0 582 990
- EP-A1- 1 391 363
- DE-A1-102012 108 538
- US-A- 5 048 751

## Beschreibung

Die Erfindung betrifft ein Ventil mit Druckeingang, Druckausgang, Rückschlagelement und eine Dichtkontur aufweisendem, beweglichem Schaltelement, wobei in einer ersten Schaltstellung des Schaltelements eine durch das Rückschlagelement und die Dichtkontur gebildete Rückschlagfunktion mit einer Durchlassrichtung vom Druckeingang zum Druckausgang und einer Sperrwirkung vom Druckausgang zum Druckeingang vorliegt.

Sperrventile und Rückschlagventile können miteinander kombiniert werden, um bestimmte funktionale Anforderungen zu erfüllen. In großen Stückzahlen sind derartige Kombinationen von Ventilen aber hinsichtlich Kosten und Platzbedarf nachteilig.

Ein Druckregelventil mit integriertem Rückschlagventil zeigt die DE 10 2012 108 538 A1. Als Schaltelement ist ein axial gegen eine Druckfeder bewegbarer Kolben vorgesehen, dessen Dichtkontur mit einer elastischen Flachmembran zur Bildung einer Rückschlagfunktion zusammenwirkt, und zwar unabhängig von der Stellung des Schaltelements. Auch ist die Konstruktion aufwendig, da zusätzlich zu einem mit einer Dichtung versehenen Durchgang die Membran mit Dichtfunktion an anderer Stelle vorgesehen ist.

Aus der US 5,048,751 ist ein Hydraulikventil für die Durchflussregelung von Kühlflüssigkeit in einem Verbrennungsmotor bekannt. Eine Membran kann an einem Ventilsitz und an einem Ventilstößel zur Anlage kommen.

Aus der EP 0 582 990 A1 ist ein Anhängersteuerventil mit Doppelventilkörper, aber ohne Rückschlagfunktion bekannt.

Aus der EP 1 391 363 A1 ist ein Proportional-Relaisventil für eine elektronische Bremsanlage bekannt. Ein Ventilkörper wird durch eine Feder gegen einen Ventilsitz gedrückt. Eine Rückschlagfunktion ist nicht vorgesehen.

Aufgabe der vorliegenden Erfindung ist die Schaffung eines integrierten Ventils mit nicht stets vorliegender Rückschlagfunktion. Angestrebt ist auch ein einfacher Aufbau.

Ein erfindungsgemäßes Ventil weist die Merkmale des Anspruchs 1 auf. Insbesondere ist vorgesehen, dass in einer zweiten Schaltstellung des Schaltelements die Sperrwirkung der Rückschlagfunktion aufgehoben ist. In der zweiten Schaltstellung ist demnach das Ventil in beide Richtungen durchgängig. Schaltelement und Rückschlagelement weisen dann vorzugsweise einen Abstand zueinander auf. In der ersten Schaltstellung liegt während der Sperrwirkung die Dichtkontur des Schaltelements an einer korrespondierenden Dichtkontur des Rückschlagelements an, insbesondere an einer Dichtlinie oder Dichtfläche.

Nach einem weiteren Gedanken der Erfindung ist die zweite Schaltstellung des Schaltelements eine Durchlassstellung, in der ein Durchgang vom Druckeingang zum Druckausgang offen ist. Zugleich ist die erste Schaltstellung eine Rückschlagsperrstellung, in der der Durchgang nur in Richtung vom Druckausgang zum Druckeingang gesperrt ist.

Es ist ein Rückstellelement vorgesehen, welches eine Rückstellkraft auf das Schaltelement in Richtung auf die zweite Schaltstellung ausübt.

Vorteilhafterweise ist das Rückstellelement eine Druckfeder.

Erfindungsgemäß kann das Rückstellelement an einem vom Druckeingang abgewandten Ende des Schaltelements angeordnet sein.

Nach einem weiteren Gedanken der Erfindung kann in der ersten Schaltstellung des Schaltelements eine Dichtwulst des Rückschlagelements an der Dichtkontur des Schaltelements zur Anlage kommen und somit eine Sperrwirkung ausüben. Nach einem weiteren Gedanken der Erfindung ist vorgesehen, dass in der ersten Schaltstellung des Schaltelements durch eine biegeelastische Verformung des Rückschlagelements eine Dichtwulst des Rückschlagelements von der Dichtkontur des Schaltelements abheben kann und so einen Durchgang vom Druckeingang zum Druckausgang ermöglicht.

Nach einem weiteren Gedanken der Erfindung ist vorgesehen, dass in der zweiten Schaltstellung des Schaltelements eine Dichtwulst des Rückschlagelements nicht zur Anlage an der Dichtkontur des Schaltelements kommen kann und somit keine Sperrwirkung eintreten kann.

Zusätzlich zu dem Rückstellelement für das Schaltelement kann ein Druckraum mit einem Steuerdruck beaufschlagbar sein.

Nach einem weiteren Gedanken der Erfindung ist das Rückschlagelement eine biegeelastische Membran. Bei Überdruck an entsprechender Stelle kann die Membran durch Eigenelastizität den Durchgang freigeben. In Sperrstellung liegt ein Abschnitt der Membran an einem Abschnitt des Schaltelements an und kann durch Überdruck an einem Druckeingang von diesem Abschnitt abgehoben werden.

Nach einem weiteren Gedanken der Erfindung ist vorgesehen, dass die Membran einen Außenrand aufweist und im Bereich dieses Außenrandes in einem Gehäuse fixiert ist. Das Gehäuse nimmt vorzugsweise auch das Schaltelement auf. Insbesondere ist der Außenrand der Membran durch einen passenden Aufsatz auf dem Gehäuse fixiert.

Nach einem weiteren Gedanken der Erfindung weist die Membran vorzugsweise mittig eine Öffnung zum Durchtritt des Schaltelements und insbesondere entlang der Öffnung einen Innenrand mit Dichtwulst auf, wobei die Dichtwulst in Sperrstellung (erster Schaltstellung) des Schaltelements an der Dichtkontur des Schaltelements anliegen kann. Bei entsprechenden Druckverhältnissen kann die Dichtwulst von der Dichtkontur abheben, insbesondere in Axialrichtung des Schaltelements.

Nach einem weiteren Gedanken der Erfindung liegt das Schaltelement in der zweiten Schaltstellung (Durchlassstellung) an einem ersten Anschlag an, insbesondere durch Wirkung einer Kraft eines Rückstellelements, und in der ersten Schaltstellung (Sperrstellung) an einem zweiten Anschlag. Vorzugsweise ist keiner der beiden Anschläge zugleich das Rückschlagelement. Dadurch kann das Rückschlagelement im Hinblick auf seine Rückschlagfunktion optimiert sein, insbesondere durch Auswahl eines geeigneten elastischen und gut dichtenden Werkstoffs.

Nach einem weiteren Gedanken der Erfindung ist das Schaltelement zylindrisch ausgebildet mit einem breiten Kopf und einem demgegenüber dünneren Hals, wobei der Hals durch eine Öffnung einer als Rückschlagelement vorgesehenen Membran ragt. Der Kopf kann in Durchlassstellung (zweite Schaltstellung) am ersten Anschlag anliegen, ebenso in Sperrstellung (erste Schaltstellung) an einer Dichtlinie bzw. Dichtwulst der Membran. Ein Kopfrand weist die Dichtkontur auf, an der die Dichtwulst in Sperrstellung zur Anlage kommt.

Nach einem weiteren Gedanken der Erfindung ist vorgesehen, dass an den Hals des Schaltelements ein demgegenüber breiterer Schulterbereich anschließt, welcher insbesondere eine außen umlaufende Dichtung aufweist. Durch die Dichtung wird ein Druckraum gegen Atmosphärendruck abgedichtet, während das Schaltelement im Gehäuse des Ventils und insbesondere im Druckraum axial bewegbar ist. Der Druckraum ist Teil des Gehäuses. Anstelle gegen Atmosphärendruck kann der Druckraum durch die Dichtung auch gegen einen weiteren Druckraum abgedichtet sein, der beispielsweise mit einem Steuerdruck beaufschlagbar ist.

Nach einem weiteren Gedanken der Erfindung sind der zweite Anschlag und/oder das Rückstellelement nicht einem Druck wie im Bereich des Rückschlagelements ausgesetzt, sondern insbesondere in einem drucklosen Bereich vorgesehen. Drucklos bedeutet hier insbesondere die Anwesenheit von Atmosphärendruck bzw. keine Abweichung vom Atmosphärendruck.

Nach einem weiteren Gedanken der Erfindung ist der Übergang von der zweiten Schaltstellung (Durchlassstellung) zur ersten Schaltstellung (Sperrstellung) des Schaltelements ausschließlich vom Druck am Druckeingang und einer Gegenkraft des Rückstellelements abhängig. Dem Druck am Druckeingang wirkt daneben nur noch Atmosphärendruck entgegen. Elektrische Hilfsenergie wird nicht benötigt.

Nach einem weiteren Gedanken der Erfindung ist vorgesehen, dass die Membran zumindest in der zweiten Schaltstellung des Schaltelements durch einen Anschlag an einer axialen Bewegung in Richtung auf das Schaltelement gehindert ist. Dabei kommt vorzugsweise ein zur Dichtwulst benachbarter Abschnitt der Membran am Anschlag zur Anlage. Durch den Anschlag wird die elastische Bewegbarkeit der Membran nur in einer von zwei axialen Richtungen begrenzt, nämlich in Richtung auf den Druckeingang. Weiterhin möglich bleibt eine Verformung der Membran in Richtung auf den Druckausgang.

Gegenstand der Erfindung ist auch eine pneumatische Bremsanlage mit einem Ventil gemäß den voranstehenden Ausführungen.

Weitere Merkmale der Erfindung ergeben sich aus der Beschreibung im Übrigen und aus den Ansprüchen. Vorteilhafte Ausführungsformen der Erfindung werden nachfolgend anhand von Zeichnungen näher erläutert. Es zeigen:
- Fig. 1: ein pneumatisches Schaltbild der Ventilfunktion mit Zuständen a und b,
- Fig. 2: einen Längsschnitt durch das Ventil entsprechend Fig. 1, Zustand a, nämlich in Durchlassstellung,
- Fig. 3: das Ventil im Längsschnitt wie in Fig. 2, jedoch in Sperrstellung und mit Überdruck am Druckausgang,
- Fig. 4: das Ventil im Längsschnitt wie in Fig. 3, jedoch mit Überdruck am Druckeingang,
- Fig. 5: ein Detail aus Fig. 2.

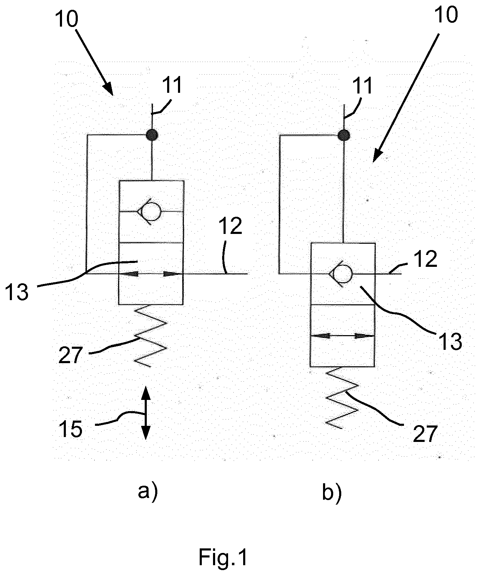

Ein Ventil 10 mit Druckeingang 11 und Druckausgang 12 weist eine Durchlassstellung entsprechend Teil a der Fig. 1 und eine Sperrstellung entsprechend Teil b von Fig. 1 auf. Das Ventil 10 ist hier als 2/2-Wege-Ventil ausgebildet. Die Sperrstellung wird hier auch als erste Schaltstellung bezeichnet, die Durchlassstellung als zweite Schaltstellung.

Ein Schaltelement 13 ist in einem Gehäuse 14 entlang einer Achse 15 bewegbar. Das Gehäuse 14 ist oberseitig offen und durch einen Aufsatz 16 mit innenliegendem Deckel 17 verschlossen. Gehäuse 14 und/oder Aufsatz 16 können Teile einer übergeordneten Vorrichtung sein.

Im Gehäuse 14 ist ein Druckraum 18 vorgesehen, welcher nach unten übergeht in einen zylindrischen Abschnitt 19. An letzteren schließt nach unten ein engerer zylindrischer Abschnitt 20 an, mit einer Entlüftungsbohrung 21 insbesondere entlang der Achse 15 in einem Boden 22 des Abschnitts 20.

Die Begriffe "oben" und "unten" beziehen sich nur auf die Darstellung und Lage in den Figuren, welche das Ventil 10 mit oben liegendem Deckel 17 zeigen.

Das Schaltelement 13 ist im Wesentlichen zylindrisch aber gestuft ausgebildet, nämlich mit einem breiten Kopf 23, einem demgegenüber schmaleren Hals 24, einer umlaufenden Schulter 25 und einem demgegenüber schmaleren und kurzen Rumpfabschnitt 26. Als Rückstellelement steckt auf dem Rumpfabschnitt 26 eine Druckfeder 27, welche in den engeren zylindrischen Abschnitt 20 hineinreicht und am Boden 22 anliegt.

Die Schulter 25 ist im zylindrischen Abschnitt 19 positioniert und weist außenseitig eine umlaufende Nut 28 zur Aufnahme einer Dichtung 29 auf. Mit der Dichtung 29 ist der Druckraum 18 gegen die Entlüftungsbohrung 21 abgedichtet.

Ein Übergang vom zylindrischen Abschnitt 19 zum engeren zylindrischen Abschnitt 20 bildet einen Anschlag 30 für die Schulter 25. In ähnlicher Weise bildet ein Kopfteil im Deckel 17 einen Anschlag 31 für den Kopf 23. Die axialen Abmessungen des Schaltelements 13 und des Gehäuses 14 sind so ausgebildet, dass das Schaltelement 13 nur zwischen den Anschlägen 30, 31 hin- und herbewegbar ist und dabei die Schulter 25 mit der Dichtung 29 im zylindrischen Abschnitt 19 bleibt.

Zugleich reicht der Kopf 23 in den Deckel 17 hinein. Zwischen Aufsatz 16 / Deckel 17 und Gehäuse 14 ist eine biegeelastische Membran 32 eingelegt und außenrandseitig festgeklemmt. Die Membran 32 wirkt als Rückschlagelement und hat dabei auch eine abdichtende Funktion für den Übergang zwischen Aufsatz 16 bzw. Deckel 17 und Gehäuse 14.

Mittig weist die Membran 32 eine Öffnung 33 auf, durch die sich der Hals 24 hindurch erstreckt. Der Kopf 23 befindet sich stets oberhalb der Membran 32.

Die Membran 32 weist entlang der Öffnung 33 einen umlaufenden, nach oben gerichteten Dichtwulst 34 auf, an dem je nach Position des Schaltelements 13 ein unterer Kopfrand 35 des Schaltelements 13 anliegen kann.

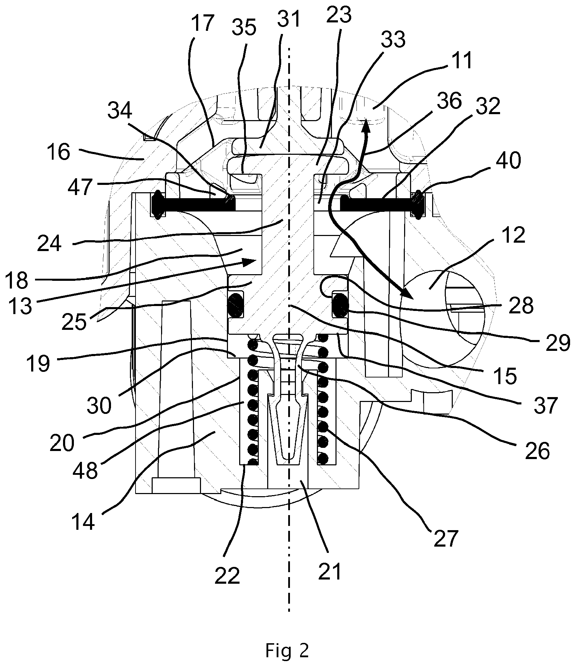

Der Druckraum 18 ist in Durchlassstellung des Schaltelements 13 gemäß den Figuren 1 (Teil a) und 2 mit dem Druckeingang 11 verbunden. Unabhängig von der Schaltstellung des Schaltelements 13 ist der Druckraum 18 zum Druckausgang 12 hin offen. Somit ist in Durchlassstellung eine Strömung in beide Richtungen möglich, siehe Doppelpfeil 36 in Fig. 2. Dabei liegt das Schaltelement 13 mit seinem Kopf 23 am Anschlag 31 an.

Eine Sperrstellung entsprechend den Figuren 1 (Teil b) und 3 stellt sich ein bei ausreichend hohem Druck im Druckraum 18. Überwunden werden muss nur die Kraft der Druckfeder 27, da die Entlüftungsbohrung 21 Atmosphärendruck führt.

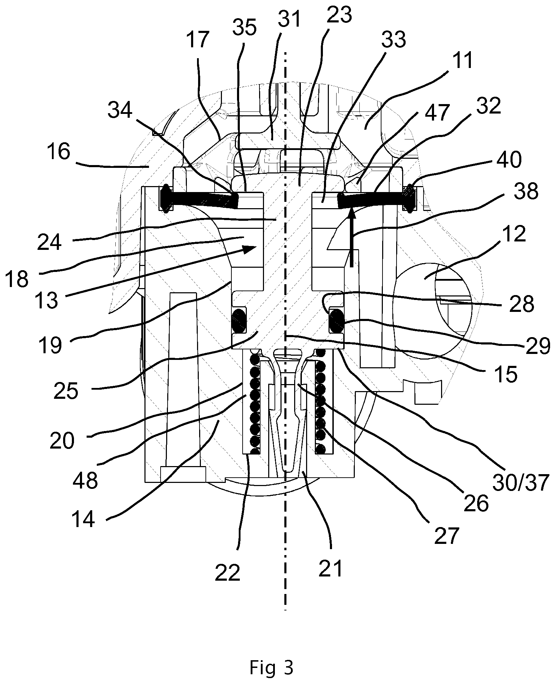

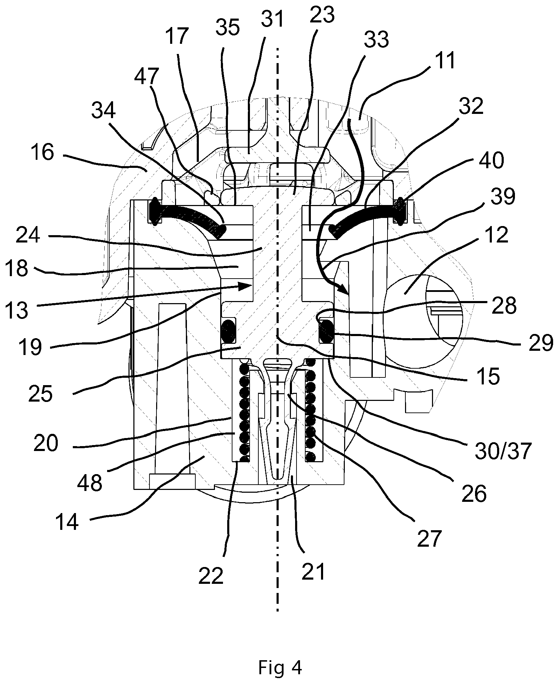

In der Sperrstellung liegt ein unterer Schulterrand 37 am Anschlag 30 an, siehe Figuren 3 und 4. In dieser Position hängt der Strömungsdurchgang durch das Ventil 10 vom Verhältnis der Drücke am Druckeingang 11 und Druckausgang 12 ab.

Ist der Druck am Druckausgang 12 höher, wird die Membran 32 mit ihrem Dichtwulst 34 gegen den Kopfrand 35 des Schaltelements 13 gepresst, siehe Pfeil 38 in Fig. 3. Die Rückschlagrichtung des Ventils 10 ist damit versperrt.

Sofern der Druck am Druckeingang 11 größer ist als am Druckausgang 12, gibt die Membran 32 radial innen dem Druck nach und hebt mit dem Dichtwulst 34 vom Kopfrand 35 ab. Ein Durchgang vom Druckeingang 11 zum Druckausgang 12 ist nun möglich, siehe Pfeil 39 in Fig. 4.

Die Membran 32 ist als Rückschlagelement des Ventils 10 in das Gehäuse 14 integriert und wirkt mit dem Schaltelement 13 zusammen. Insgesamt weist der Druckraum 18 nur zwei Dichtungen auf, nämlich die Membran 32 mit ihrem Dichtwulst 34 zur Anlage am Kopf 23 des Schaltelements 13 und die umlaufende Dichtung 29 in der Schulter 25 zur Anlage am zylindrischen Abschnitt 19. Zusätzlich fungiert die Membran 32 mit ihrem Außenrand 40 als Dichtung zwischen Gehäuse 14, Deckel 17 und Aufsatz 16.

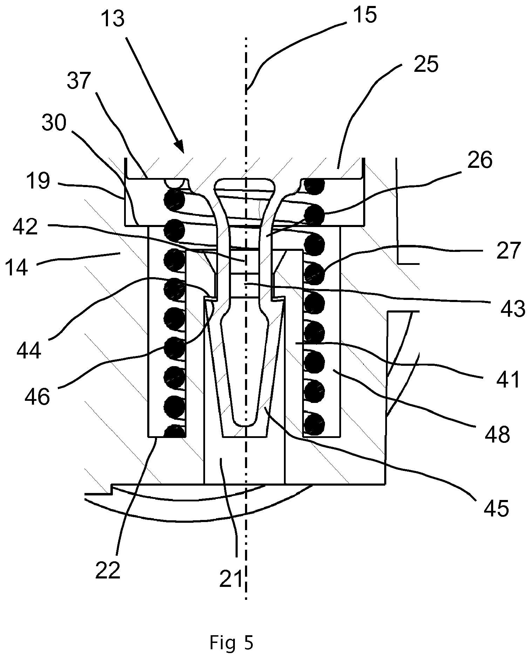

Rumpfabschnitt 26 und Boden 22 können gemäß Fig. 5 in besonderer Weise gestaltet sein. Der Boden 22 weist mittig eine zylindrische Erhebung nach Art eines Hohlzylinders 41 auf. Dieser ist an seinem oberen Ende mit einem trichterförmigen Eingang 42 und einer daran nach unten anschließenden Querschnittsverengung 43 versehen. Die Querschnittsverengung 43 geht nach unten in einen breiteren Querschnitt (der Entlüftungsbohrung 21) über und bildet dabei einen Absatz 44. Die Entlüftungsbohrung 21 erstreckt sich von unten durch den Hohlzylinder 41 bis an den Absatz 44. Die Druckfeder 27 steckt außen mit möglichst wenig Reibung auf dem Hohlzylinder 41.

Der Rumpfabschnitt 26 weist ein abwärtsgerichtetes kegelförmiges Ende 45 auf, welches im Hohlzylinder 41 steckt. Am Übergang vom Rumpfabschnitt 26 zum zunächst breiteren Ende 45 ist ein Absatz 46 gebildet. Rumpfabschnitt 26 und Ende 45 sind hohl ausgebildet und können nicht gezeigte Lüftungsöffnungen aufweisen. Der Rumpfabschnitt 26 passt mit seinem Außenquerschnitt gerade in die Querschnittsverengung 43. Der Absatz 46 ist breiter als die Querschnittsverengung 43 und verhakt mit dem Absatz 44.

Rumpfabschnitt 26 und Ende 45 sind elastisch eindrückbar, so dass das Ende 45 bei der Montage in den Eingang 42 und die Querschnittsverengung 43 einführbar ist, bis die Absätze 44, 46 einander passiert haben und miteinander verhakt sind. Dadurch kann das Schaltelement 13 mit gespannter Druckfeder 27 in das Gehäuse 14 eingesetzt werden, ohne dass zusätzliche Haltemittel erforderlich sind. Das Schaltelement 13 ist vorzugsweise aus einem ausreichend elastischen Kunststoff hergestellt.

Wie in Fig. 2 ersichtlich, liegt die Membran 32 in Durchlassstellung des Schaltelements 13 mit einem Bereich nahe der Öffnung 33 an einem insbesondere umlaufenden Anschlag 47 an. Vom Anschlag 47 hier nicht berührt ist die benachbarte Dichtwulst 34. Die Membran 32 ist gegen den ortsfesten Anschlag 47 nicht in Richtung auf den Druckeingang 11 bewegbar oder verformbar.

Durch die Entlüftungsbohrung 21 kann in einer weiteren Ausführungsform ein Steuerdruck zugeführt werden, so dass unterhalb der Dichtung 29 ein weiterer Druckraum 48 gebildet ist und die Funktion der Druckfeder 27 unterstützt oder sogar ersetzt.

### Bezugszeichenliste (Bestandteil der Beschreibung)

- 10: Ventil
- 11: Druckeingang
- 12: Druckausgang
- 13: Schaltelement
- 14: Gehäuse
- 15: Achse
- 16: Aufsatz
- 17: Deckel
- 18: Druckraum
- 19: zylindrischer Abschnitt
- 20: engerer zylindrischer Abschnitt
- 21: Entlüftungsbohrung
- 22: Boden
- 23: Kopf
- 24: Hals
- 25: Schulter
- 26: Rumpfabschnitt
- 27: Druckfeder
- 28: Nut
- 29: Dichtung
- 30: Anschlag
- 31: Anschlag
- 32: Membran
- 33: Öffnung
- 34: Dichtwulst
- 35: Kopfrand
- 36: Doppelpfeil
- 37: Schulterrand
- 38: Pfeil
- 39: Pfeil
- 40: Außenrand
- 41: Hohlzylinder
- 42: Eingang
- 43: Querschnittsverengung
- 44: Absatz
- 45: kegelförmiges Ende
- 46: Absatz
- 47: Anschlag
- 48: Druckraum

## Patentansprüche

1. Ventil (10) für eine pneumatische Bremsanlage, mit Druckeingang (11), Druckausgang (12), Rückschlagelement (32) und eine Dichtkontur (35) aufweisendem, beweglichen Schaltelement (13), wobei in einer ersten Schaltstellung des Schaltelements (13) eine durch das Rückschlagelement (32) und die Dichtkontur (35) gebildete Rückschlagfunktion mit einer Durchlassrichtung vom Druckeingang (11) zum Druckausgang (12) und einer Sperrwirkung vom Druckausgang (12) hin zum Druckeingang (11) vorliegt, **dadurch gekennzeichnet, dass** in einer zweiten Schaltstellung des Schaltelements (13) diese Sperrwirkung aufgehoben ist, wobei ein Rückstellelement (27) vorgesehen ist, welches eine Rückstellkraft auf das Schaltelement (13) in Richtung auf die zweite Schaltstellung ausübt, wobei das Rückstellelement (27) eine Druckfeder ist und/oder zusätzlich zu dem Rückstellelement (27) für das Schaltelement (13) ein Druckraum (48) mit einem Steuerdruck beaufschlagbar ist.

2. Ventil nach Anspruch 1, **dadurch gekennzeichnet, dass** die zweite Schaltstellung des Schaltelements (13) eine Durchlassstellung ist, in der ein Durchgang vom Druckeingang (11) zum Druckausgang (12) offen ist, und dass die erste Schaltstellung eine Rückschlagsperrstellung ist, in der der Durchgang nur in Richtung vom Druckausgang (12) zum Druckeingang (11) gesperrt ist.

3. Ventil nach einem der Ansprüche 1 und 2, **dadurch gekennzeichnet, dass** das Rückstellelement (27) an einem vom Druckeingang (11) abgewandten Ende des Schaltelements (13) angeordnet ist.

4. Ventil nach einem der Ansprüche 1 bis 3, **dadurch gekennzeichnet, dass** in der ersten Schaltstellung des Schaltelements (13) eine Dichtwulst (34) des Rückschlagelements (32) an der Dichtkontur (35) zur Anlage kommen kann und somit eine Sperrwirkung ausüben kann.

5. Ventil nach einem der Ansprüche 1 bis 4, **dadurch gekennzeichnet, dass** in der ersten Schaltstellung des Schaltelements (13) durch eine biegeelastische Verformung des Rückschlagelements (32) eine Dichtwulst (34) des Rückschlagelements (32) von der Dichtkontur (35) abheben kann und so einen Durchgang vom Druckeingang (11) zum Druckausgang (12) ermöglicht.

6. Ventil nach einem der Ansprüche 1 bis 5, **dadurch gekennzeichnet, dass** in der zweiten Schaltstellung des Schaltelements (13) eine Dichtwulst (34) des Rückschlagelements (32) nicht zur Anlage an der Dichtkontur (35) des Schaltelements (13) kommen kann und somit keine Sperrwirkung eintreten kann.

7. Ventil nach einem der Ansprüche 1 bis 6, **dadurch gekennzeichnet, dass** das Rückschlagelement (32) eine biegeelastische Membran ist.

8. Ventil nach Anspruch 7, **dadurch gekennzeichnet, dass** die Membran (32) einen Außenrand (40) aufweist und im Bereich dieses Außenrandes (40) in einem Gehäuse (14) fixiert ist.

9. Ventil nach Anspruch 7 oder 8, **dadurch gekennzeichnet, dass** die Membran (32) eine Öffnung (33) zum Durchtritt des Schaltelements (13) aufweist und insbesondere entlang der Öffnung (33) einen Innenrand mit Dichtwulst (34) aufweist, wobei die Dichtwulst (34) in Sperrstellung des Schaltelements (13) an der Dichtkontur (35) des Schaltelements (13) anliegen kann.

10. Ventil nach einem der Ansprüche 1 bis 9, **dadurch gekennzeichnet, dass** das Schaltelement (13) in der zweiten Schaltstellung an einem ersten Anschlag (31) anliegt, insbesondere durch Wirkung einer Kraft eines Rückstellelements (27), und in der ersten Schaltstellung an einem zweiten Anschlag (30).

11. Ventil nach einem der Ansprüche 1 bis 10, **dadurch gekennzeichnet, dass** das Schaltelement (13) zylindrisch ausgebildet ist, mit einem breiten Kopf (23) und einem demgegenüber dünneren Hals (24), und dass der Hals (24) durch eine Öffnung (33) einer als Rückschlagelement (32) vorgesehenen Membran ragt.

12. Ventil nach Anspruch 11, **dadurch gekennzeichnet, dass** an den Hals (24) des Schaltelements (13) ein demgegenüber breiterer Schulterbereich (25) anschließt, welcher insbesondere eine außen umlaufende Dichtung (29) aufweist.

13. Ventil nach Anspruch 10, **dadurch gekennzeichnet, dass** der zweite Anschlag (30) und/oder das Rückstellelement (27) nicht einem Druck wie im Bereich des Rückschlagelements (32) ausgesetzt, sondern insbesondere in einem drucklosen Bereich vorgesehen sind.

14. Ventil nach einem der Ansprüche 1 bis 13, **dadurch gekennzeichnet, dass** der Übergang von der zweiten Schaltstellung zur ersten Schaltstellung des Schaltelements (13) ausschließlich vom Druck am Druckeingang (11) und einer Gegenkraft des Rückstellelements (27) abhängig ist.

15. Ventil nach Anspruch 7, **dadurch gekennzeichnet, dass** die Membran (32) zumindest in der zweiten Schaltstellung des Schaltelements (13) durch einen Anschlag (47) an einer axialen Bewegung in Richtung auf das Schaltelement (13) gehindert ist.

16. Pneumatische Bremsanlage mit einem Ventil nach einem der Ansprüche 1 bis 15.

## Claims

1. A valve (10) for a pneumatic brake system, with pressure input (11), pressure outlet (12), non-return element (32) and a movable switching element (13) having a sealing contour (35), wherein in a first switching position of the switching element (13) a check function formed by the non-return element (32) and the sealing contour (35) is present with a passage direction from the pressure input (11) to the pressure outlet (12) and a blocking effect from the pressure outlet (12) to the pressure input (11), **characterized in that** in a second switching position of the switching element (13) this blocking effect is canceled, wherein a return element (27) is provided, which exerts a restoring force on the switching element (13) in the direction toward the second switching position, wherein the return element (27) is a compression spring and/or in addition to the return element (27) control pressure can be applied to a pressure chamber (48) for the switching element (13).

2. The valve according to claim 1, **characterized in that** the second switching position of the switching element (13) is a passage position, in which a passage from the pressure input (11) to the pressure outlet (12) is open, and that the first switching position is a non-return position, in which the passage is only blocked in the direction from the pressure outlet (12) to the pressure input (11).

3. The valve according to any of claims 1 and 2, **characterized in that** the return element (27) is arranged at an end of the switching element (13) averted from the pressure input (11).

4. The valve according to any of claims 1 to 3, **characterized in that** in the first switching position of the switching element (13) a sealing bead (34) of the non-return element (32) can come to rest at the sealing contour (35) and hence can exert a blocking effect.

5. The valve according to any of claims 1 to 4, **characterized in that** in the first switching position of the switching element (13) by means of a flexurally elastic deformation of the non-return element (32) a sealing bead (34) of the non-return element (32) can be lifted from the sealing contour (35) and thus enables a passage from the pressure input (11) to the pressure outlet (12).

6. The valve according to any of claims 1 to 5, **characterized in that** in the second switching position of the switching element (13) a sealing bead (34) of the non-return element (32) cannot come to rest at the sealing contour (35) of the switching element (13) and hence no blocking effect can occur.

7. The valve according to any of claims 1 to 6, **characterized in that** the non-return element (32) is a flexurally elastic membrane.

8. The valve according to claim 7, **characterized in that** the membrane (32) has an outer edge (40) and is fixed in a housing (14) in the region of this outer edge (40).

9. The valve according to claim 7 or 8, **characterized in that** the membrane (32) has an opening (33) for passage of the switching element (13) and in particular has an inner edge along the opening (33) with a sealing bead (34), wherein the sealing bead (34) can abut on the sealing contour (35) of the switching element (13) in the blocking position of the switching element (13).

10. The valve according to any of claims 1 to 9, **characterized in that** the switching element (13) abuts on a first stop (31) in the second switching position, in particular by means of the action of the force of a return element (27), and in the first switching position abuts on a second stop (30).

11. The valve according to any of claims 1 to 10, **characterized in that** the switching element (13) is cylindrical with a broad head (23) and an in contrast thinner neck (24), and **in that** the neck (24) protrudes through an opening (33) of a membrane provided as a non-return element (32) .

12. The valve according to claim 11, **characterized in that** at the neck (24) of the switching element (13) a shoulder region (25) broader in contrast connects, which in particular has an outer circumferential seal (29).

13. The valve according to claim 10, **characterized in that** the second stop (30) and/or the return element (27) is not exposed to a pressure as in the region of the non-return element (32), but rather are provided in particular in a pressure-free region.

14. The valve according to any of claims 1 to 13, **characterized in that** the transition from the second switching position to the first switching position of the switching element (13) depends exclusively on the pressure at the pressure input (11) and a counterforce of the return element (27) .

15. The valve according to claim 7, **characterized in that** at least in the second switching position of the switching element (13) the membrane (32) is prevented from an axial movement in the direction of the switching element (13) by a stop (47).

16. A pneumatic brake system with a valve according to any of claims 1 to 15.

## Revendications

1. Soupape (10) pour un système de freinage pneumatique, avec une entrée de pression (11), une sortie de pression (12), un élément antiretour (32) et un élément de commutation (13) mobile présentant un contour d'étanchéité (35), dans laquelle dans une première position de commutation de l'élément de commutation (13), une fonction antiretour formée par l'élément antiretour (32) et le contour d'étanchéité (35) avec une direction de passage de l'entrée de pression (11) à la sortie de pression (12) et une action de blocage à partir de la sortie de pression (12) en direction de l'entrée de pression (11) est présente, **caractérisée en ce que**, dans une deuxième position de commutation de l'élément de commutation (13), cette action de blocage est annulée, dans laquelle un élément de rappel (27) est prévu, lequel exerce une force de rappel sur l'élément de commutation (13) en direction de la deuxième position de commutation, dans laquelle l'élément de rappel (27) est un ressort de pression et/ou en plus de l'élément de rappel (27) pour l'élément de commutation (13) une chambre de pression (48) peut être sollicitée avec une pression de commande.

2. Soupape selon la revendication 1, **caractérisée en ce que** la deuxième position de commutation de l'élément de commutation (13) est une position de passage, dans laquelle un passage de l'entrée de pression (11) à la sortie de pression (12) est ouvert, et que la première position de commutation est une position de blocage antiretour, dans laquelle le passage n'est bloqué qu'en direction de la sortie de pression (12) vers l'entrée de pression (11).

3. Soupape selon l'une quelconque des revendications 1 et 2, **caractérisée en ce que** l'élément de rappel (27) est disposé à une extrémité de l'élément de commutation (13) opposée à l'entrée de pression (11).

4. Soupape selon l'une quelconque des revendications 1 à 3, **caractérisée en ce que** dans la première position de commutation de l'élément de commutation (13), un bourrelet d'étanchéité (34) de l'élément antiretour (32) peut venir en appui sur le contour d'étanchéité (35) et peut donc exercer une action de blocage.

5. Soupape selon l'une quelconque des revendications 1 à 4, **caractérisée en ce que** dans la première position de commutation de l'élément de commutation (13), un bourrelet d'étanchéité (34) de l'élément antiretour (32) peut se soulever du contour d'étanchéité (35) du fait d'une déformation élastique en flexion de l'élément antiretour (32) et permet ainsi un passage de l'entrée de pression (11) vers la sortie de pression (12).

6. Soupape selon l'une quelconque des revendications 1 à 5, **caractérisée en ce que** dans la deuxième position de commutation de l'élément de commutation (13), un bourrelet d'étanchéité (34) de l'élément antiretour (32) ne peut pas venir en appui sur le contour d'étanchéité (35) de l'élément de commutation (13) et aucune action de blocage ne peut donc se produire.

7. Soupape selon l'une quelconque des revendications 1 à 6, **caractérisée en ce que** l'élément antiretour (32) est une membrane élastique en flexion.

8. Soupape selon la revendication 7, **caractérisée en ce que** la membrane (32) présente un bord extérieur (40) et est fixée dans la zone de ce bord extérieur (40) dans un boîtier (14) .

9. Soupape selon la revendication 7 ou 8, **caractérisée en ce que** la membrane (32) présente une ouverture (33) pour le passage de l'élément de commutation (13) et en particulier présente le long de l'ouverture (33) un bord intérieur avec un bourrelet d'étanchéité (34), dans laquelle le bourrelet d'étanchéité (34) dans la position de blocage de l'élément de commutation (13) peut s'appliquer sur le contour d'étanchéité (35) de l'élément de commutation (13).

10. Soupape selon l'une quelconque des revendications 1 à 9, **caractérisée en ce que** l'élément de commutation (13) dans la deuxième position de commutation s'applique sur une première butée (31), en particulier par action d'une force d'un élément de rappel (27), et dans la première position de commutation sur une deuxième butée (30).

11. Soupape selon l'une quelconque des revendications 1 à 10, **caractérisée en ce que** l'élément de commutation (13) est réalisé de manière cylindrique, avec une tête (23) large et un col (24) plus mince par rapport à celle-ci, et que le col (24) fait saillie par une ouverture (33) d'une membrane prévue en tant qu'élément antiretour (32).

12. Soupape selon la revendication 11, **caractérisée en ce qu'**au col (24) de l'élément de commutation (13) se raccorde une zone d'épaulement (25) plus large par rapport à celui-ci, laquelle présente en particulier un joint (29) extérieurement périphérique.

13. Soupape selon la revendication 10, **caractérisée en ce que** la deuxième butée (30) et/ou l'élément de rappel (27) ne sont pas exposés à une pression telle que dans la zone de l'élément antiretour (32), mais sont prévus en particulier dans une zone exempte de pression.

14. Soupape selon l'une quelconque des revendications 1 à 13, **caractérisée en ce que** le passage de la deuxième position de commutation à la première position de commutation de l'élément de commutation (13) dépend exclusivement de la pression sur l'entrée de pression (11) et d'une force antagoniste de l'élément de rappel (27).

15. Soupape selon la revendication 7, **caractérisée en ce que** la membrane (32) au moins dans la deuxième position de commutation de l'élément de commutation (13) est empêchée de se déplacer axialement en direction de l'élément de commutation (13) par une butée (47).

16. Système de freinage pneumatique avec une soupape selon l'une quelconque des revendications 1 à 15.
